# EUROPEAN PATENT SPECIFICATION

(11) **EP 2 487 593 B1**
(45) Date of publication and mention of the grant of the patent: **29.05.2019**
(21) Application number: 10822117.7
(22) Date of filing: 04.10.2010
(51) Int. Cl.: G06F 11/30, G06F 11/34

(54) **OPERATIONAL SURVEILLANCE DEVICE, OPERATIONAL SURVEILLANCE METHOD AND PROGRAM STORAGE MEDIUM**
BETRIEBSÜBERWACHUNGSVORRICHTUNG, BETRIEBSÜBERWACHUNGSVERFAHREN UND PROGRAMMSPEICHERMEDIUM
DISPOSITIF DE SURVEILLANCE OPÉRATIONNELLE, PROCÉDÉ DE SURVEILLANCE OPÉRATIONNELLE ET SUPPORT DE STOCKAGE DE PROGRAMME

(30) Priority: 08.10.2009 JP 2009233994
(43) Date of publication of application: 15.08.2012
(73) Proprietor: NEC Corporation, Tokyo 108-8001 (JP)
(72) Inventor: II, Akiko, Tokyo 108-8001 (JP)
(74) Representative: Vossius & Partner Patentanwälte Rechtsanwälte mbB
(86) International application number: PCT/JP2010/067704
(87) International publication number: WO 2011/043447

(56) References cited:
- JP-A- 2003 099 294
- JP-A- 2003 263 342
- JP-A- 2006 018 369
- JP-A- 2006 338 543
- US-A1- 2006 277 295
- US-A1- 2007 220 139

## Description

### Technical Field

The present invention relates to an operation monitoring device, an operation monitoring method and a program storing medium which monitor a plurality of types of performance information of an operation monitoring target machine.

### Background Art

An operation monitoring device and an operation monitoring method which monitor a plurality of types of performance information of an operation monitoring target machine are known. In this type of operation monitoring device, usually, a threshold value is set for each of a plurality of types of performance information and whether or not each of the performance information exceeds the threshold value is monitored. In case any one of the performance information exceeds the threshold value, the operation monitoring device detects this as abnormal and sends an abnormal report to an administrator.

However, in this type of operation monitoring device, various types of performance information have to be collected in a short interval in order to perform operation monitoring more accurately.

For this reason, there is a problem that a load for collecting performance information becomes high.

Accordingly, an operation monitoring device which groups performance information having strong correlation among a plurality of types of the performance information, selects a representative of the performance information from the grouped performance information, and focuses on monitoring the selected performance information, is proposed (for example, refer to Japanese Patent Application Laid-Open No. 2003-263342).

In such an operation monitoring device, there is an advantage that a load for collecting the performance information is reduced because the limited performance information is collected.

Document US2007/220139 A1 discloses a method for collecting performance information of applications in application group. In that document, a collection policy is set for each application in the group. In the collection policy of each application, a timing at which performance information is to be collected is defined with a condition. As the condition, a CPU usage rate or disk usage rate is set. A timing associated with a satisfied condition is determined as the collection timing of each application.

Document US2006/277295 A1 discloses a method for monitoring a system. In that document, monitored objects having the same performance characteristics are included in the same group.

### Summary of Invention

### [Technical Problem]

However, even if the pieces of the performance information having strong correlation are grouped, each piece of performance information in a group may not show correlation in every fluctuating region.

For this reason, in case only the representative of the performance information is monitored, there is a risk that abnormality of a non-representative of the performance information is overlooked.

It is possible to reduce such an overlook of abnormality to some extent by selecting the representative of the performance information dynamically depending on the situation. However, it would add a load for selecting the representative of the performance information dynamically depending on the situation so that achieving the original object to reduce a monitoring load would be rather difficult.

An object of the present invention is to provide an operation monitoring device, an operation monitoring method and a program storing medium which solve the problem mentioned above and can monitor abnormality of the non-representative of the performance information efficiently without increasing a monitoring load at ordinary times, by the operation monitoring device which groups a plurality of types of the performance information and focuses on monitoring the representative of the grouped performance information.

### [Solution to Problem]

An operation monitoring device apparatus according to an exemplary aspect of the invention includes a performance information collection means for collecting a plurality of types of performance information of an operation monitoring target machine, a performance analysis means for analyzing the performance information collected by the performance information collection means, a performance information grouping means for grouping the plurality of types of the performance information of the operation monitoring target machine based on a predetermined condition, and a monitoring condition alteration means for making the performance information collection means perform collection of a representative of the performance information grouped by the performance information grouping means at a predetermined interval, making the performance information collection means stop collection of a non-representative of the performance information grouped or making the performance information collection means perform collection thereof at an interval longer than the interval for the representative of the performance information, and further, in case that a fluctuation rate or a fluctuation amount of the representative of the performance information exceeds a predetermined threshold value, making the performance information collection means start collection of the non-representative of the performance information grouped or making the performance information collection means perform collection thereof at an interval shorter than ordinary times.

An operation monitoring method according to an exemplary aspect of the invention includes collecting a plurality of types of performance information of an operation monitoring target machine, analyzing the performance information collected, grouping the plurality of types of the performance information of the operation monitoring target machine based on a predetermined condition, and controlling an interval for collection of a representative of the performance information grouped to be a predetermined interval, stopping collection, performed by the performance information collection procedure, of a non-representative of the performance information grouped or controlling an interval for collection thereof to be an interval longer than the interval for the representative of the performance information, and further, in case that a fluctuation rate or a fluctuation amount of the representative of the performance information exceeds a predetermined threshold value, starting collection, performed by the performance information collection procedure, of the non-representative of the performance information grouped or controlling the interval for collection thereof to be an interval shorter than ordinary times.

A program recording medium recording thereon an operation monitoring program, causing computer to perform a method, according to an exemplary aspect of the invention includes collecting a plurality of types of performance information of an operation monitoring target machine, analyzing the performance information collected, grouping the plurality of types of the performance information of the operation monitoring target machine based on a predetermined condition, and controlling an interval for collection of a representative of the performance information grouped to be a predetermined interval, stopping collection, performed by the performance information collection procedure, of a non-representative of the performance information grouped or controlling an interval for collection thereof to be an interval longer than the interval for the representative of the performance information, and further, in case that a fluctuation rate or a fluctuation amount of the representative of the performance information exceeds a predetermined threshold value, starting collection, performed by the performance information collection procedure, of the non-representative of the performance information grouped or controlling the interval for collection thereof to be an interval shorter than ordinary times.

### [Advantageous Effects of Invention]

According to the present invention, abnormality of the non-representative of the performance information can also be monitored efficiently without increasing a monitoring load at ordinary times by an operation monitoring device which groups a plurality of types of the performance information and focuses on monitoring the representative of the grouped performance information.

Embodiments relate only to claimed combinations of features. In the following, when the term "embodiment" relates to unclaimed combinations of features, said term has to be understood as referring to examples of the present invention.

### Brief Description of Drawings

[Fig. 1] A block diagram showing a basic structure of an operation monitoring device according to an exemplary embodiment of the present invention.
[Fig. 2] A block diagram showing a concrete structure of the operation monitoring device according to the exemplary embodiment of the present invention.
[Fig. 3] A block diagram showing a structure of a performance analysis unit of the operation monitoring device according to the exemplary embodiment of the present invention.
[Fig. 4] A flow chart showing correlation model generation processing of the operation monitoring device according to the exemplary embodiment of the present invention.
[Fig. 5] A flow chart showing administrator dialogue processing of the operation monitoring device according to the exemplary embodiment of the present invention.
[Fig. 6] A flow chart showing monitoring condition alteration processing of the operation monitoring device according to the exemplary embodiment of the present invention.
[Fig. 7] A flow chart showing performance information display processing of the operation monitoring device according to the exemplary embodiment of the present invention.
[Fig. 8] A block diagram showing a usage example of the operation monitoring device according to the exemplary embodiment of the present invention.
[Fig. 9] An explanatory drawing showing an example of performance information to be grouped in the operation monitoring device according to the exemplary embodiment of the present invention.
[Fig. 10] An explanatory drawing showing an example of operation monitoring performed by the operation monitoring device according to the exemplary embodiment of the present invention.
[Fig. 11] An explanatory drawing showing an example of a performance estimation performed by the operation monitoring device according to the exemplary embodiment of the present invention.

### Description of Embodiments

Hereinafter, an exemplary embodiment of an operation monitoring device, an operation monitoring method and an operation monitoring program of the present invention will be described with reference to drawings.

The following processing operation executed by the operation monitoring device and the operation monitoring method of the present invention is realized by processing, means or functions executed by instructions of a program (software) on a computer.

For example, in case the operation monitoring device of the present invention is structured by a host computer (operation monitoring target machine) and a monitoring manager communicatively connected therewith via a network, the operation monitoring device of the present invention is structured by dividing the operation monitoring program of the present invention into a program for the host computer and a program for the monitoring manager and by installing the programs in the computer for the host computer and the computer for the monitoring manager respectively.

Also, in case an operation monitoring device of the present invention is structured only by a host computer (operation monitoring target machine), the operation monitoring device of the present invention is structured by installing an operation monitoring program of the present invention in the computer for the host computer.

Further, a program for the monitoring manager may be installed in a plurality of computers for the monitoring manager to perform distributed processing, or one monitoring manager may perform operation monitoring for a plurality of computers for the host computer in which a program for the host computer is installed.

Thus each processing or a means in the present invention is realized by a concrete means in which a program and a computer work in cooperation with each other.

Further, all or a part of a program is provided by, for example, a magnetic disk, an optical disc, a semiconductor memory or any other computer-readable recording medium, and a program read from the recording medium is installed in a computer and executed. Also, a program may be loaded in a computer not via a recording medium but directly through a communication line and executed.

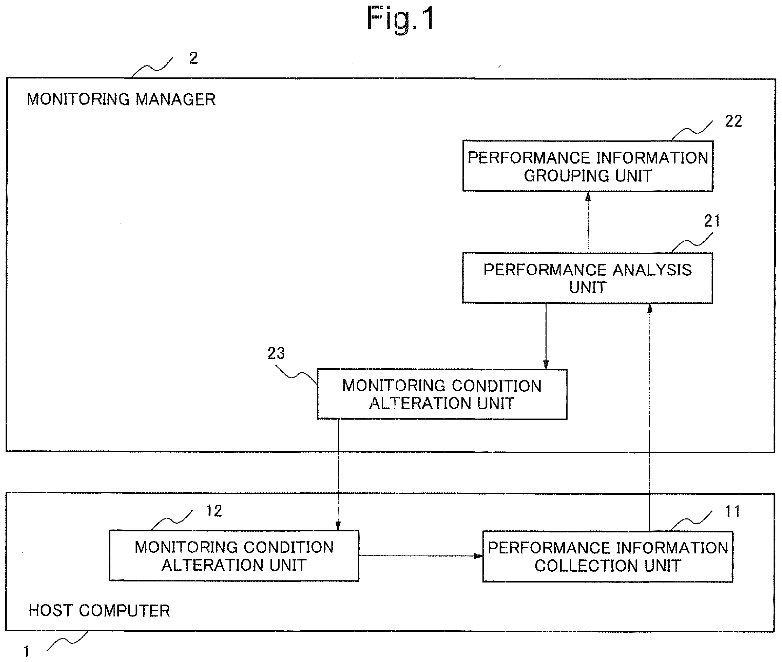

Fig. 1 is a block diagram showing a basic structure of an operation monitoring device according to the exemplary embodiment of the present invention.

As shown in this figure, the operation monitoring device according to the exemplary embodiment includes, for example, a host computer 1 which is an operation monitoring target machine, and monitoring manager 2 which is communicatively connected to the host computer 1.

Concretely, the operation monitoring device of the exemplary embodiment includes a performance information collection unit 11 which collects a plurality of types of performance information of the host computer 1, a performance analysis unit 21 which analyzes the performance information which is collected by the performance information collection unit 11, a performance information grouping unit 22 which groups a plurality of types of the performance information of the host computer 1 based on a predetermined condition, and monitoring condition alteration units 12 and 23 which alter types and collection intervals for the performance information collected by the performance information collection unit 11.

And the monitoring condition alteration units 12 and 23 make the performance information collection unit 11 perform collection of a representative of the performance information grouped by the performance information grouping unit 22 at a predetermined interval.

Also, the monitoring condition alteration units 12 and 23 make the performance information collection unit 11 stop collection of a non-representative of the performance information or make the performance information collection unit 11 perform collection thereof at an interval longer than the interval for the representative of the performance information.

Further, in case that a fluctuation rate (or a fluctuation amount) of the representative of the performance information exceeds a predetermined threshold value, the monitoring condition alteration units 12 and 23 make the performance information collection unit 11 start collection of the non-representative of the performance information or make the performance information collection unit 11 perform collection thereof at an interval shorter than ordinary times.

According to such an operation monitoring device, it is possible to group a plurality of types of the performance information, and focus on monitoring the representative of the grouped performance information.

As a result, a monitoring load at ordinary times can be reduced.

Also, in case that the representative of the performance information fluctuates greatly, it is possible to start monitoring the non-representative of the performance information or to make the monitoring interval thereof shorter.

As a result, abnormality of the non-representative of the performance information can also be monitored efficiently without increasing the monitoring load at ordinary times.

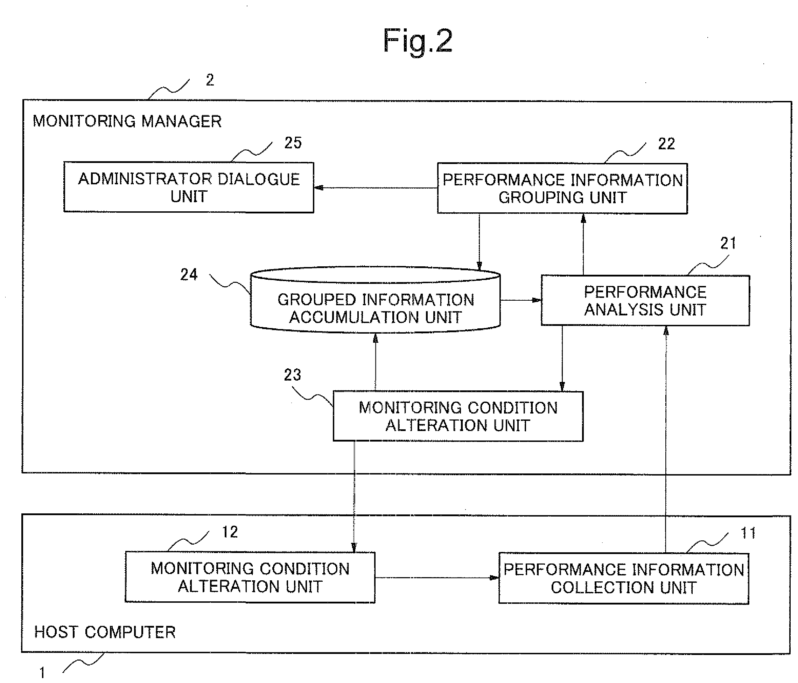

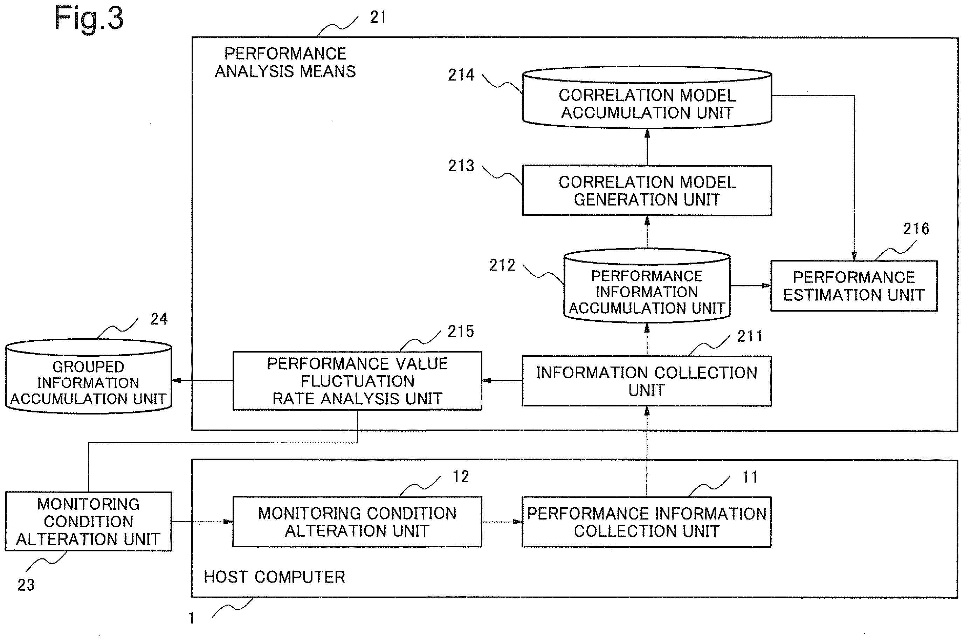

Hereinafter, a concrete structure of the operation monitoring device according to the exemplary embodiment will be described with reference to Fig. 2 and Fig. 3.

Fig. 2 is a block diagram showing a concrete structure of the operation monitoring device according to the exemplary embodiment.

As shown in this figure, the operation monitoring device according to the exemplary embodiment includes the host computer 1 and the monitoring manager 2. The host computer 1 includes the performance information collection unit 11 and the monitoring condition alteration unit 12. The monitoring manager 2 includes the performance analysis unit 21, the performance information grouping unit 22, the monitoring condition alteration unit 23, a grouped information accumulation unit 24 and an administrator dialogue unit 25.

The performance information collection unit 11 of the host computer 1 collects a plurality of types of the performance information of the host computer 1. For example, the performance information collection unit 11 collects work processing times, CPU loads, memory usage rates, and the like for web services, business services, or the like executed on the host computer 1.

The monitoring condition alteration unit 12 of the host computer 1 alters the type of the performance information or the collection interval for the performance information collected by the performance information collection unit 11 according to directions from the monitoring condition alteration unit 23 installed in the monitoring manager 2.

The performance analysis unit 21 of the monitoring manager 2 analyzes the performance information collected by the performance information collection unit 11 of the host computer 1. For example, the performance analysis unit 21 analyzes the fluctuation rate of the predetermined performance information, judges it as abnormal in case that the fluctuation rate exceeds the predetermined threshold value, and sends an abnormal report or the like to an administrator or the like.

Also, the performance analysis unit 21 calculates a transform function between a plurality of the performance information and generates a predetermined correlation model.

The performance information grouping unit 22 of the monitoring manager 2 refers to the correlation model generated by the performance analysis unit 21, and groups the performance information having strong correlation. And the performance information grouping unit 22 registers the grouped performance information to the grouped information accumulation unit 24.

The administrator dialogue unit 25 of the monitoring manager 2 shows the types of the performance information grouped by the performance information grouping unit 22 to the administrator or the like so that the type of the performance information is selected thereby as the representative in a group. The type of the performance information selected as the representative by the administrator or the like is registered to the grouped information accumulation unit 24.

Also the administrator dialogue unit 25 makes the administrator select various monitoring conditions such as a collection interval for the representative of the performance information for ordinary times, whether or not to collect the non-representative of the performance information for ordinary times, a collection interval for the non-representative of the performance information for ordinary times, and a collection interval for the non-representative of the performance information for the case that the representative of the performance information is fluctuating. The various monitoring conditions selected by the administrator or the like are registered to grouped information accumulation unit 24.

The monitoring condition alteration unit 23 of the monitoring manager 2 periodically confirms information about the grouped information and the monitoring conditions registered to the grouped information accumulation unit 24. And monitoring condition alteration unit 23 transmits the altered monitoring condition to the monitoring condition alteration unit 12 of the host computer 1 according to the contents newly registered and the contents updated, so that the types and the collection intervals for the performance information collected by the performance information collection unit 11 are altered.

Also, the monitoring condition alteration unit 23 transmits the altered monitoring condition to the monitoring condition alteration unit 12 of the host computer 1 in case that an alteration instruction of the monitoring condition is received from the performance analysis unit 21, so that the types and the collection intervals for the performance information collected by the performance information collection unit 11 are altered.

As a result, monitoring condition alteration unit 23 can make the performance information collection unit 11 perform collection of the representative of the performance information grouped by the performance information grouping unit 22 at the predetermined interval.

Also, the monitoring condition alteration unit 23 can make the performance information collection unit 11 stop collection of the non-representative of the performance information or make the performance information collection unit 11 perform collection thereof at an interval longer than the interval for the representative of the performance information.

Further, in case that the fluctuation rate (or the fluctuation amount) of the representative of the performance information exceeds the predetermined threshold value, the monitoring condition alteration unit 23 can make the performance information collection unit 11 start collection of the non-representative of the performance information or make the performance information collection unit 11 perform collection thereof at an interval shorter than ordinary times.

Fig. 3 is a block diagram showing a detailed structure of the performance analysis unit 21 of the operation monitoring device according to the exemplary embodiment of the present invention.

As shown in this figure, the performance analysis unit 21 of the exemplary embodiment includes an information collection unit 211, a performance information accumulation unit 212, a correlation model generation unit 213, a correlation model accumulation unit 214, a performance value fluctuation rate analysis unit 215 and a performance estimation unit 216.

The information collection unit 211 receives the performance information collected by the performance information collection unit 11 of the host computer 1 and accumulates it in the performance information accumulation unit 212.

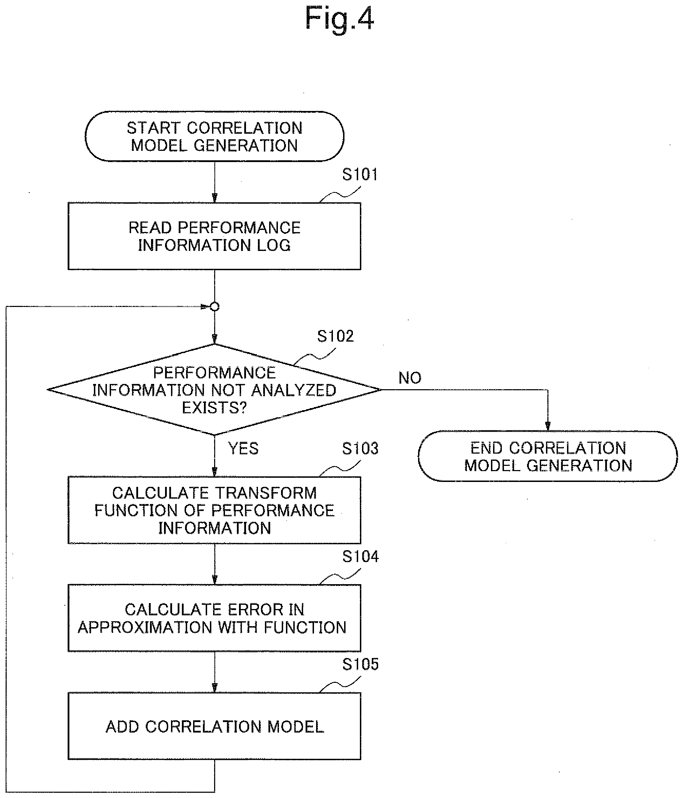

The correlation model generation unit 213 generates the predetermined correlation model between pieces of the performance information which indicates an operational state of the host computer 1 by taking out the performance information for a certain period of time from the performance information accumulation unit 212, and calculating the transform function of the time series between any two pieces of the performance information (refer to Fig. 4).

The correlation model accumulation unit 214 accumulates the correlation model generated by the correlation model generation unit 213.

And the performance information grouping unit 22 groups the performance information having strong correlation based on the transform function of the correlation model accumulated here.

The performance value fluctuation rate analysis unit 215 acquires the monitoring conditions set by the administrator or the like from the grouped information accumulation unit 24 and monitors fluctuation of the representative of the performance information.

Concretely, the performance value fluctuation rate analysis unit 215 acquires the representative of the performance information at the predetermined interval from the performance information accumulation unit 212 and calculates the fluctuation rate.

In case the fluctuation rate of the representative of the performance information exceeds the predetermined threshold value, the performance value fluctuation rate analysis unit 215 notifies the monitoring condition alteration units 23 and 12 to alter the monitoring condition for the non-representative of the performance information in the same group so that the types and the collection intervals for the performance information collected by the performance information collection unit 11 are altered.

The performance estimation unit 216 estimates the non-representative of the performance information based on the transform function accumulated in the correlation model accumulation unit 214 and a measured value of the representative of the performance information.

According to such performance estimation unit 216, even when the performance information collection unit 11 is not collecting the non-representative of the performance information, it becomes possible to show the estimated performance value to an administrator.

For example, when the performance information collection unit 11 is collecting the non-representative of the performance information, the non-representative of the performance information actually collected can be shown to the administrator or the like, and when the performance information collection unit 11 is not collecting the non-representative of the performance information, the non-representative of the performance information estimated by the performance estimation unit 216 can be shown to the administrator or the like.

Next, processing procedures of various processing executed in the operation monitoring device according to the exemplary embodiment will be described with reference to Fig. 4 to Fig. 7.

Fig. 4 is a flow chart showing correlation model generation processing of the operation monitoring device according to the exemplary embodiment of the present invention.

As shown in this figure, in the correlation model generation processing, first, the correlation model generation unit 213 of the performance analysis unit 21 reads a log of the performance information from the performance information accumulation unit 212 (Step S101) and judges whether or not the performance information not analyzed exists (Step S102).

In case judged that the performance information not analyzed exists, the correlation model generation unit 213 calculates the transform function between the piece of the performance information not analyzed and the other piece thereof (Step S103), calculates an error in approximation with the function (Step S104) and adds the correlation model to the correlation model accumulation unit 214 (Step S105).

A series of above mentioned processing (Steps S102 to S105) is repeated until the performance information not analyzed does not exist.

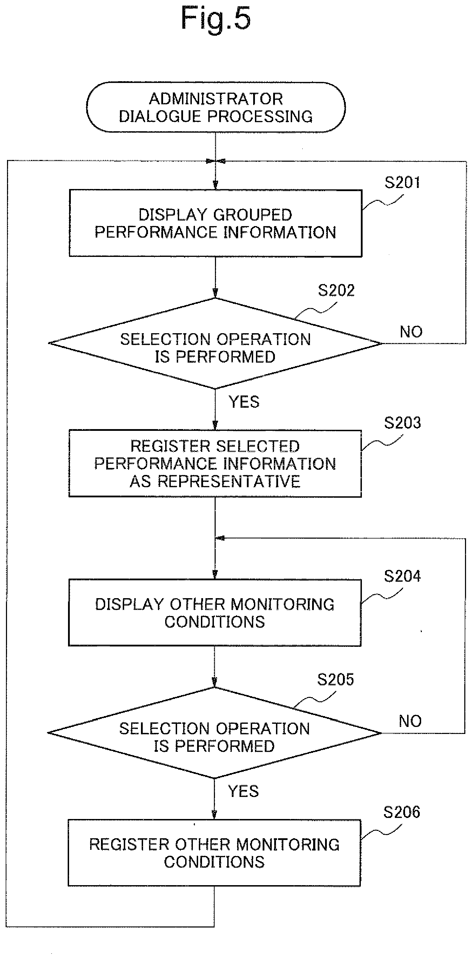

Fig. 5 is a flow chart showing administrator dialogue processing of the operation monitoring device according to the exemplary embodiment of the present invention.

As shown in this figure, in the administrator dialogue processing, first, the administrator dialogue unit 25 displays the types of the performance information grouped by the performance information grouping unit 22 on a screen for the administrator (Step S201), and makes the administrator and or the like select the type of the performance information as the representative in a group. Here, when selection operation by the administrator or the like is performed (Step S202/Yes), the type of the performance information selected as the representative is registered to the grouped information accumulation unit 24 (Step S203).

Next, the administrator dialogue unit 25 displays the various monitoring conditions such as the collection interval for the representative of the performance information for ordinary times, whether or not to collect the non-representative of the performance information for ordinary times, the collection interval for the non-representative of the performance information for ordinary times, and the collection interval for the non-representative of the performance information for the case that the representative of the performance information is fluctuating, on the screen for the administrator (Step S204), and makes the administrator or the like select the various monitoring conditions.

When the selection operation by the administrator or the like is performed (Step S205/Yes), the selected various monitoring conditions are registered to the grouped information accumulation unit 24 (Step S206).

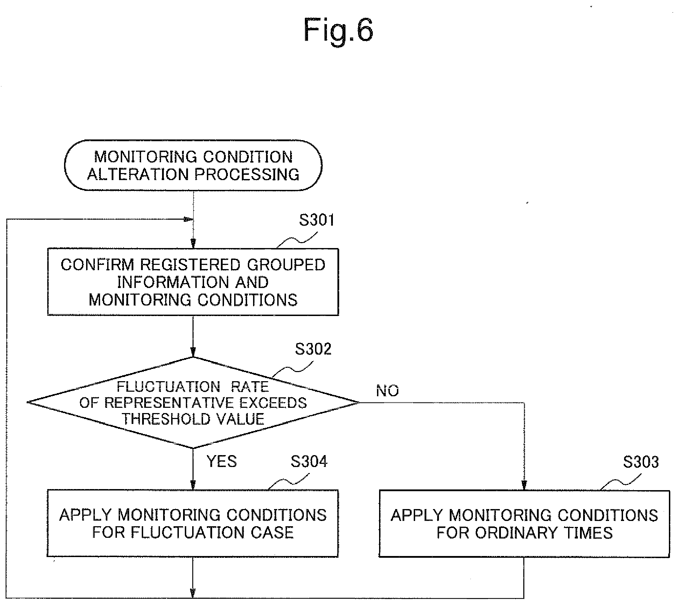

Fig. 6 is a flow chart showing monitoring condition alteration processing of the operation monitoring device according to the exemplary embodiment of the present invention.

As shown in this figure, in the monitoring condition alteration processing, first, the monitoring condition alteration unit 23 periodically confirms information about the grouped information and the monitoring conditions (the monitoring condition for ordinary times and the monitoring condition for fluctuation case) registered to the grouped information accumulation unit 24 (Step S301).

Also, monitoring condition alteration unit 23 judges whether or not the fluctuation rate of the representative of the performance information exceeds the predetermined threshold value based on monitoring condition alteration directions from the performance analysis unit 21 (Step S302).

In case judged that the fluctuation rate of the representative of the performance information does not exceed the predetermined threshold value (Step S302/No), the monitoring condition alteration unit 23 transmits the monitoring condition for ordinary times to the monitoring condition alteration unit 12 of the host computer 1 so that the performance information is collected by the performance information collection unit 11 according to the monitoring condition for ordinary times (Step S303).

On the other hand, in case judged that the fluctuation rate of the representative of the performance information exceeds the predetermined threshold value (Step S302/Yes), the monitoring condition alteration unit 23 transmits the monitoring condition for fluctuation case to the monitoring condition alteration unit 12 of the host computer 1 so that the performance information is collected by the performance information collection unit 11 according to the monitoring condition for fluctuation case (Step S304).

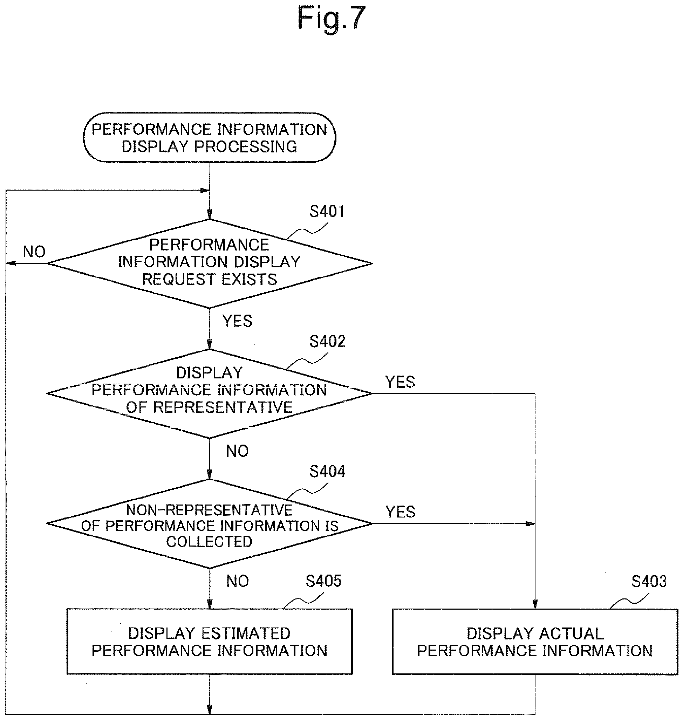

Fig. 7 is a flow chart showing performance information display processing of the operation monitoring device according to the exemplary embodiment of the present invention.

As shown in this figure, in the performance information display processing, first, it is judged whether or not a performance display request from an administrator or the like exists (Step S401).

In case judged that the performance display request from the administrator or the like exists, it is judged whether or not the performance information requested to be displayed is the representative of the performance information (Step S402).

And in case judged that it is the representative of the performance information (Step S402/Yes), the representative of the performance information actually collected by the performance information collection unit 11 is displayed on the screen for the administrator (Step S403).

On the other hand, in case judged that it is not the representative of the performance information (Step S402/No), it is judged whether or not the performance information collection unit 11 is collecting the non-representative of the performance information (Step S404). In case judged that the performance information collection unit 11 is collecting the non-representative of the performance information (Step S404/Yes), the non-representative of the performance information actually collected by the performance information collection unit 11 is displayed on the screen for the administrator (Step S403).

Also in case judged that the performance information collection unit 11 is not collecting the non-representative of the performance information (Step S404/No), the non-representative of the performance information estimated by the performance estimation unit 216 is displayed on the screen for the administrator (S405).

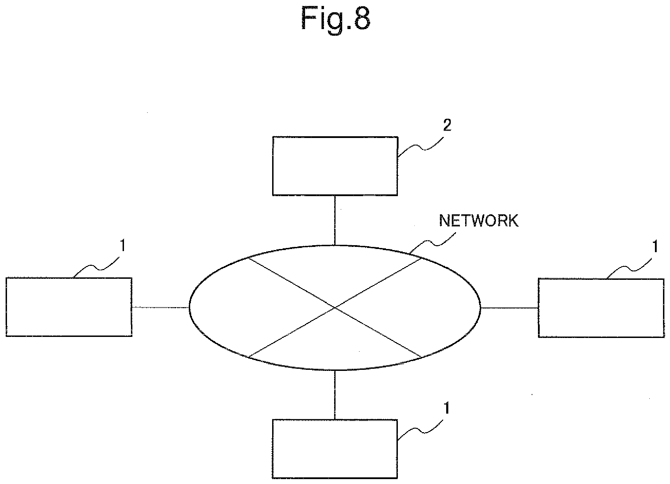

Next, operation of the operation monitoring device according to the exemplary embodiment of the present invention will be described with reference to Fig. 8 to Fig. 11.

Fig. 8 is a block diagram showing a usage example of the operation monitoring device according to the exemplary embodiment of the present invention.

The usage example shown in this figure shows a case that operation monitoring of a plurality of host computers 1 is performed by one monitoring manager 2. In this case, a program for a host computer is installed in each of a plurality of the host computers 1, and a program for a monitoring manager is installed in the monitoring manager 2.

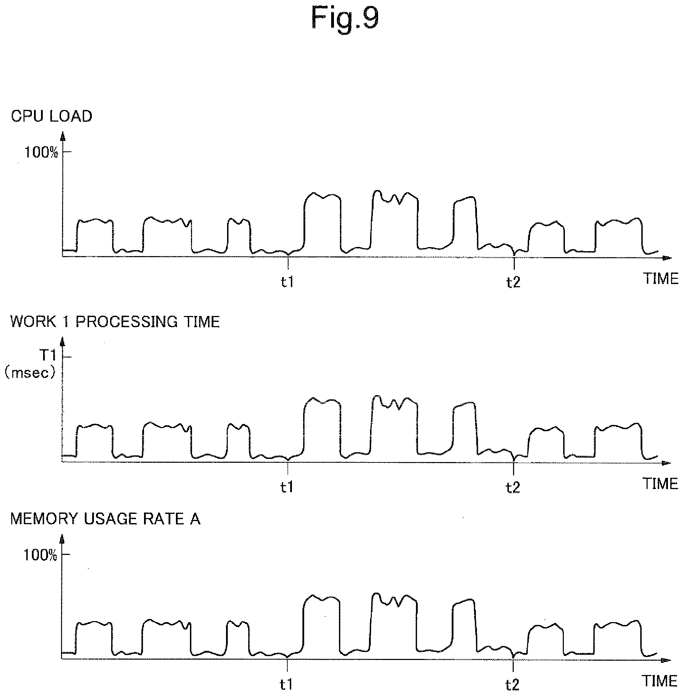

Fig. 9 is an explanatory drawing showing an example of the performance information to be grouped in the operation monitoring device according to the exemplary embodiment of the present invention.

In the example shown in this figure, among a plurality of types of the performance information of the host computer 1, a CPU load, processing time of work 1 and a memory usage rate A are monitored as the performance information.

Each of the performance information is changing in time series, and the performance information is collected by the performance information collection unit 11 of the host computer 1, and is provided to the performance analysis unit 21 of the monitoring manager 2.

The performance analysis unit 21 accumulates each of the performance information and generates the predetermined correlation model based on the accumulated performance information.

The performance information grouping unit 22 of the monitoring manager 2 groups the CPU load, the processing time of work 1 and the memory usage rate A of the host computer 1, when there is correlation among these pieces of the performance information.

The administrator dialogue unit 25 shows types of the grouped performance information to an administrator or the like. As a result, the administrator or the like can select the type of the performance information as the representative in a group.

Here, it is supposed that the CPU load is selected as the representative of the performance information. The performance data of the CPU load being the representative is continuously collected at a regular interval.

Also, the administrator or the like is required to select the monitoring condition for the performance information other than the CPU load being the representative in the group.

For example, the administrator or the like performs selection of the monitoring conditions for ordinary times in such a way that the processing time of work 1 is monitored at a time interval three times as long as a the monitoring interval for monitoring the CPU load, and the memory usage rate A is not monitored as far as there is no fluctuation in the CPU load being the representative.

Also, for example, the administrator or the like performs selection of the monitoring conditions for fluctuation case in such a way that the processing time of work 1 and the memory usage rate A are monitored at the same time interval as the monitoring interval fro monitoring the CPU load in case there is fluctuation in the CPU load being representative.

The monitoring conditions selected by the administrator or the like are notified from the administrator dialogue unit 25 to the performance information grouping unit 22.

The performance information grouping unit 22 registers the monitoring conditions selected by the administrator or the like to the grouped information accumulation unit 24.

The monitoring condition alteration unit 23 periodically confirms the information about the grouped information and the monitoring conditions registered to the grouped information accumulation unit 24, and transmits the altered monitoring condition to the monitoring condition alteration unit 12 of the host computer 1 according to the contents newly registered and the contents updated. As a result, the types and the collection intervals for the performance information collected by the performance information collection unit 11 are altered.

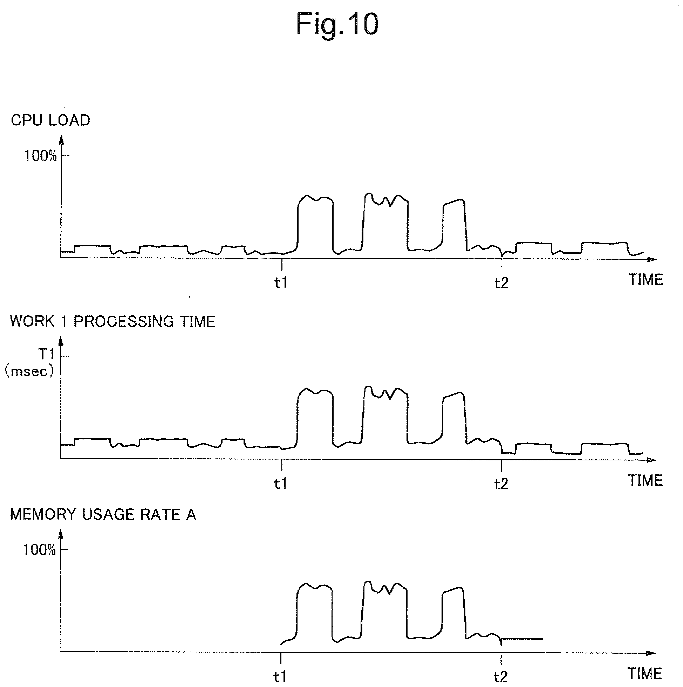

Fig. 10 is an explanatory drawing showing an example of operation monitoring performed by the operation monitoring device according to the exemplary embodiment of the present invention.

In case the CPU load fluctuates from elapsed time t1 as shown in this figure, the performance value fluctuation rate analysis unit 215 of the monitoring manager 2 judges whether or not the fluctuation rate of the CPU load being the representative exceeds the predetermined threshold value.

Here, in case the fluctuation rate of the CPU load being the representative exceeds the predetermined threshold value, the monitoring condition alteration unit 23 notifies the monitoring condition alteration unit 12 of the host computer 1 to perform monitoring all the performance information in the group registered to the grouped information accumulation unit 24 based on the monitoring conditions for fluctuation case. As a result, the types and the collection intervals for the performance information collected by the performance information collection unit 11 are altered.

Also, when the fluctuation rate of the CPU load being the representative is equal to or lower than the predetermined threshold value at elapsed time t2, the monitoring conditions are returned back in such a way that the monitoring interval for the processing time of work 1 is tripled and the memory usage rate A is not monitored based on the monitoring conditions for ordinary times registered to the grouped information accumulation unit 24.

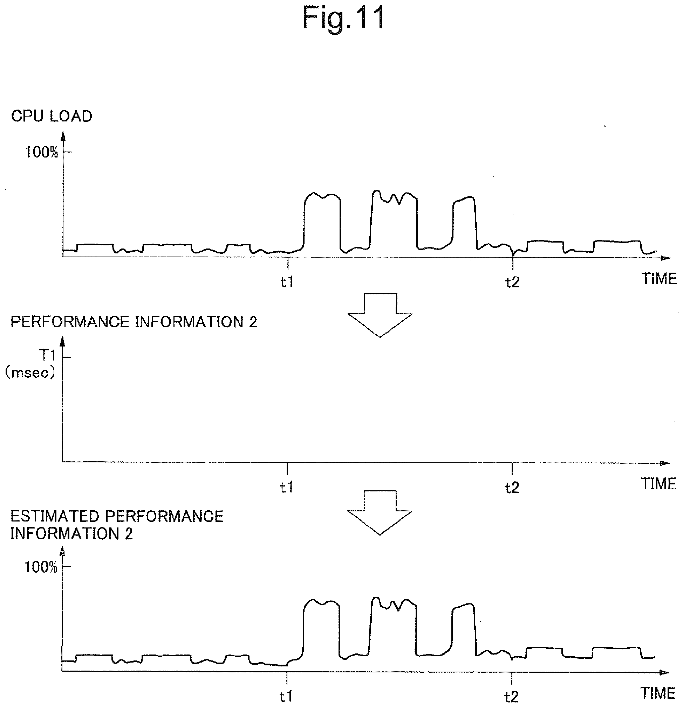

Fig. 11 is an explanatory drawing showing an example of a performance estimation performed by the operation monitoring device according to the exemplary embodiment of the present invention.

When the monitoring conditions are set in such a way that the representative of the performance information is the CPU load and performance information 2 is not monitored at ordinary times as shown in this figure, there is a case that the administrator or the like needs to confirm the performance information 2.

In this case, the performance estimation unit 216 of the exemplary embodiment acquires the transform function for the performance information 2 which is not monitored from the correlation model accumulation unit 214, acquires the performance data of the CPU load being the representative, calculates a measured value of the performance information 2 from both of them and shows it to the administrator or the like.

As described above, according to the exemplary embodiment, the performance information collection unit 11 which collects a plurality of types of the performance information of the operation monitoring target machine, the performance analysis unit 21 which analyzes the performance information collected by the performance information collection unit 11, the performance information grouping unit 22 which groups a plurality of types of the performance information of the operation monitoring target machine based on the predetermined condition, and the monitoring condition alteration units 12 and 23 which alter the types and the collection intervals for the performance information collected by the performance information collection unit 11 are included, and the monitoring condition alteration units 12 and 23 make the performance information collection unit 11 perform collection of the representative of the performance information grouped by the performance information grouping unit 22 at the predetermined interval. Also, collection of the non-representative of the performance information by the performance information collection unit 1 1 is stopped or collection thereof by the performance information collection unit 11 is performed at the interval longer than the interval for the representative of the performance information. Further, in case that the fluctuation rate or the fluctuation amount of the representative of the performance information exceeds the predetermined threshold value, collection of the non-representative of the performance information by the performance information collection unit 11 is started or collection thereof by the performance information collection unit 11 is performed at the interval shorter than ordinary times.

As a result, in the operation monitoring device which groups a plurality of types of the performance information and focuses on monitoring the representative of the grouped performance information, abnormality of the non-representative of the performance information can also be monitored efficiently without increasing a monitoring load at ordinary times.

Also, because the performance analysis unit 21 calculates the transform function between a plurality of types of the performance information, and the performance information grouping unit 22 groups the performance information having strong correlation based on the transform function, the performance information of the whole group can be grasped with high accuracy in the operation monitoring device which groups a plurality of types of the performance information and focuses on monitoring the representative of the grouped performance information,.

Also, because the performance estimation unit 216 estimates the non-representative of the performance information based on the representative of the performance information and the transform function a estimated value of the non-representative of the performance information can be shown to the administrator even if the performance information collection unit 11 is not collecting the non-representative of the performance information.

Also, the operation monitoring device shows the non-representative of the performance information actually collected to the administrator or the like when the performance information collection unit 11 is collecting the non-representative of the performance information, shows the non-representative of the performance information estimated by the performance estimation unit 216 to the administrator or the like when the performance information collection unit 11 is not collecting the non-representative of the performance information. As a result, regardless of whether or not monitoring is performed, the performance information requested by the administrator or the like can be shown, and the accuracy of the shown data value can be made high by showing the actual measured value, not the estimated value, when monitoring is performed.

Further, according to the exemplary embodiment, the administrator dialogue unit 25 sets at least one among the type of the representative of the performance information, the collection interval for the representative of the performance information for ordinary times, whether to collect the non-representative of the performance information for ordinary times, the collection interval for the non-representative of the performance information for ordinary times, and the collection interval for the non-representative of the performance information for the case that the representative of the performance information is fluctuating, according to a setting operation by the administrator or the like. As a result, it is possible to alter the monitoring conditions arbitrary according to a work which is targeted for monitoring, the host computer 1 which is targeted for monitoring and the monitoring manager 2 which performs monitoring, and to perform appropriate operation monitoring.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

### Industrial Applicability

The present invention is applied to an operation monitoring device, an operation monitoring method and an operation monitoring program which monitor a plurality of types of performance information of an operation monitoring target machine. The present invention is useful, in the field in which various performances of an information processing device or the like which provides information and communications services such as, for example, web services or business services are monitored, and especially, in which it is required to monitor the performance information correctly while to reduce a monitoring load.

### Reference Signs List

1 Host computer
2 Monitoring manager
11 Performance information collection unit
12 Monitoring condition alteration unit
21 Performance analysis unit
22 Performance information grouping unit
23 Monitoring condition alteration unit
24 Grouped information accumulation unit
25 Administrator dialogue unit
211 Information collection unit
212 Performance information accumulation unit
213 Correlation model generation unit
214 Correlation model accumulation unit
215 Performance value fluctuation rate analysis unit
216 Performance estimation unit

## Claims

1. An operation monitoring device comprising:
a performance information collection means for collecting a plurality of types of performance information of an operation monitoring target machine;
a performance analysis means for analyzing said performance information collected by said performance information collection means;
a performance information grouping means for generating a group that includes a plurality of types of said performance information of said operation monitoring target machine based on a predetermined condition; and
a monitoring condition alteration means for making said performance information collection means perform collection of a representative type of said performance information for said group generated by said performance information grouping means at a predetermined interval, said monitoring condition alteration means being adapted for
- making said performance information collection means stop collection of a non-representative type of said performance information for said group, said non-representative type being other type than said representative type of said performance information for said group, or
- making said performance information collection means perform collection thereof at a first interval which is longer than the interval for said representative type of said performance information,
and wherein, in case that a fluctuation rate or a fluctuation amount of said representative type of said performance information exceeds a predetermined threshold value, the monitoring condition alteration means being further adapted for
- making said performance information collection means start collection of said non-representative type of said performance information or
- making said performance information collection means perform collection thereof at a second interval which is shorter than said first interval.

2. The operation monitoring device according to claim 1, wherein said performance analysis means calculates a transform function between said plurality of types of said performance information; and
said performance information grouping means generates said group that includes said performance information having strong correlation based on said transform function.

3. The operation monitoring device according to claim 2 further comprising a performance estimation means for estimating said non-representative type of said performance information based on said representative type of said performance information and said transform function.

4. The operation monitoring device according to claim 3, wherein said non-representative type of said performance information actually collected is shown when said performance information collection means is collecting said non-representative type of said performance information, and said non-representative type of said performance information estimated by said performance estimation means is shown when said performance information collection means is not collecting said non-representative type of said performance information.

5. The operation monitoring device according to any one of claims 1 to 4 further comprising a dialogue means for setting at least one among said representative type, a collection interval for said representative type of said performance information, whether to collect said
non-representative type of said performance information for ordinary times, said first interval, and said second interval, according to a setting operation.

6. An operation monitoring method comprising:
collecting a plurality of types of performance information of an operation monitoring target machine;
analyzing said performance information collected;
generating a group that includes a plurality of types of said performance information of said operation monitoring target machine based on a predetermined condition; and
performing collection of a representative type of said performance information for said group at a predetermined interval, while
- stopping collection of a non-representative type of said performance information for said group, said non-representative type being other type than said representative type of said performance information for said group, or
- performing collection thereof at a first interval which is longer than the interval for said representative type of said performance information,
and wherein, in case that a fluctuation rate or a fluctuation amount of said representative type of said performance information exceeds a predetermined threshold value,
- starting collection of said non-representative type of said performance information or
- performing collection thereof at a second interval which is shorter than said first interval.

7. The operation monitoring method according to claim 6, wherein
said analyzing said performance information collected calculates a transform function between said plurality of types of said performance information; and
said generating a group generates said group that includes said performance information having strong correlation based on said transform function.

8. The operation monitoring method according to claim 7, further comprising estimating said non-representative type of said performance information based on said representative type of said performance information and said transform function.

9. The operation monitoring method according to claim 8, wherein said non-representative type of said performance information actually collected is shown when said non-representative type of said performance information is being collected, and said non-representative type of said performance information estimated based on said representative type of said performance information and said transform function is shown when said non-representative type of said performance information is not being collected.

10. The operation monitoring method according to any one of claims 6 to 9, further comprising setting at least one among said representative type, a collection interval for said representative type of said performance information, whether to collect said non-representative type of said performance information for ordinary times, said first interval, and said second interval, according to a setting operation.

11. A computer readable medium recording thereon an operation monitoring program, causing computer to perform a method comprising:
collecting a plurality of types of performance information of an operation monitoring target machine;
analyzing said performance information collected;
generating a group that includes a plurality of types of said performance information of said operation monitoring target machine based on a predetermined condition; and
performing collection of a representative type of said performance information for said group at a predetermined interval, while
- stopping collection of a non-representative type of said performance information for said group, said non-representative type being other type than said representative type of said performance information for said group, or
- performing collection thereof at a first interval which is longer than the interval for said representative type of said performance information,
and wherein, in case that a fluctuation rate or a fluctuation amount of said representative type of said performance information exceeds a predetermined threshold value,
- starting collection of said non-representative type of said performance information or
- performing collection thereof at a second interval which is shorter than said first interval.

12. The computer readable medium according to claim 11, recording thereon said operation monitoring program, wherein
said analyzing said performance information collected calculates a transform function between said plurality of types of said performance information; and
said generating a group generates said group that includes said performance information having strong correlation based on said transform function.

13. The computer readable medium according to claim 12, recording thereon said operation monitoring program, further comprising estimating said non-representative type of said performance information based on said representative type of said performance information and said transform function.

14. The computer readable medium according to claim 13, recording thereon said operation monitoring program, wherein said non-representative type of said performance information actually collected is shown when said non-representative type of said performance information is being collected, and said non-representative type of said performance information estimated based on said representative type of said performance information and said transform function is shown when said non-representative type of said performance information is not being collected.

15. The computer readable medium according to any one of claims 11 to 14, recording thereon said operation monitoring program, further comprising setting at least one among said representative type, a collection interval for said representative type of said performance information, whether to collect said non-representative type of said performance information for ordinary times, said first interval, and said second interval, according to a setting operation.

## Patentansprüche

1. Betriebsüberwachungsvorrichtung mit:
einer Leistungsfähigkeitsinformationssammeleinrichtung zum Sammeln mehrerer Typen von Leistungsfähigkeitsinformation einer Betriebsüberwachungszielmaschine;
einer Leistungsfähigkeitsanalyseeinrichtung zum Analysieren der durch die Leistungsfähigkeitsinformationssammeleinrichtung gesammelten Leistungsfähigkeitsinformation;
einer Leistungsfähigkeitsinformationsgruppierungseinrichtung zum Erzeugen einer Gruppe, die mehrere Typen der Leistungsfähigkeitsinformation der Betriebsüberwachungszielmaschine enthält, basierend auf einer vorgegebenen Bedingung; und
einer Überwachungsbedingungsänderungseinrichtung, die die Leistungsfähigkeitsinformationssammeleinrichtung veranlasst, repräsentative Typen der Leistungsfähigkeitsinformation für die Gruppe, die durch die Leistungsfähigkeitsinformationsgruppierungseinrichtung erzeugt wird, in einem vorgegebenen Intervall zu sammeln, wobei die Überwachungsbedingungsänderungseinrichtung dazu eingerichtet ist
die Leistungsfähigkeitsinformationssammeleinrichtung zu veranlassen, den Vorgang zum Sammeln eines nicht-repräsentativen Typs der Leistungsfähigkeitsinformation für die Gruppe zu stoppen, wobei der nicht-repräsentative Typ ein vom repräsentativen Typ der Leistungsfähigkeitsinformation für die Gruppe verschiedener Typ ist, oder
die Leistungsfähigkeitsinformationssammeleinrichtung zu veranlassen, in einem ersten Intervall, das länger ist als das Intervall für den repräsentativen Typ der Leistungsfähigkeitsinformation, den Vorgang zum Sammeln davon auszuführen,
und wobei, in dem Fall, dass eine Schwankungsrate oder ein Schwankungsmaß des repräsentativen Typs der Leistungsfähigkeitsinformation einen vorgegebenen Schwellenwert überschreitet, die Überwachungsbedingungsänderungseinrichtung ferner dazu eingerichtet ist,
die Leistungsfähigkeitsinformationssammeleinrichtung zu veranlassen, den Vorgang zum Sammeln des nicht-repräsentativen Typs der Leistungsfähigkeitsinformation zu starten, oder
die Leistungsfähigkeitsinformationssammeleinrichtung zu veranlassen, in einem zweiten Intervall, das kürzer ist als das erste Intervall, den Vorgang zum Sammeln davon auszuführen.

2. Betriebsüberwachungsvorrichtung nach Anspruch 1, wobei die Leistungsfähigkeitsanalyseeinrichtung eine Transformationsfunktion zwischen den mehreren Typen der Leistungsfähigkeitsinformation berechnet; und
die Leistungsfähigkeitsinformationsgruppierungseinrichtung die Gruppe, die die Leistungsfahigkeitsinformation mit einer starken Korrelation enthält, basierend auf der Transformationsfunktion erzeugt.

3. Betriebsüberwachungsvorrichtung nach Anspruch 2, ferner mit einer Leistungsfähigkeitsschätzeinrichtung zum Schätzen des nicht-repräsentativen Typs der Leistungsfähigkeitsinformation basierend auf dem repräsentativen Typ der Leistungsfähigkeitsinformationen und der Transformationsfunktion.

4. Betriebsüberwachungsvorrichtung nach Anspruch 3, wobei der tatsächlich gesammelte nicht-repräsentative Typ der Leistungsfähigkeitsinformation angezeigt wird, wenn die Leistungsfähigkeitsinformationssammeleinrichtung den nicht-repräsentativen Typ der Leistungsfähigkeitsinformation sammelt, und wobei der nicht-repräsentative Typ der Leistungsfähigkeitsinformation, der durch die Leistungsfähigkeitsschätzeinrichtung geschätzt wird, angezeigt wird, wenn die Leistungsfähigkeitsinformationssammeleinrichtung den nicht-repräsentativen Typ der Leistungsfähigkeitsinformation nicht sammelt.

5. Betriebsüberwachungsvorrichtung nach einem der Ansprüche 1 bis 4, ferner mit einer Dialogeinrichtung zum Setzen mindestens einer Information unter dem repräsentativen Typ, einem Sammelintervall für den repräsentativen Typ der Leistungsfähigkeitsinformation, ob der nicht-repräsentative Typ der Leistungsfähigkeitsinformation für normale Zeiten gesammelt werden soll, dem ersten Intervall und dem zweiten Intervall gemäß einem Setzvorgang.

6. Betriebsüberwachungsverfahren, das aufweist:
Sammeln mehrerer Typen von Leistungsfähigkeitsinformation einer Betriebsüberwachungszielmaschine;
Analysieren der gesammelten Leistungsfähigkeitsinformation;
Erzeugen einer Gruppe, die mehrere Typen der Leistungsfähigkeitsinformation der Betriebsüberwachungszielmaschine enthält, basierend auf einer vorgegebenen Bedingung; und
Ausführen eines Vorgangs zum Sammeln eines repräsentativen Typs der Leistungsfähigkeitsinformation für die Gruppe in einem vorgegebenen Intervall, während
der Vorgang zum Sammeln eines nicht-repräsentativen Typs der Leistungsfähigkeitsinformation für die Gruppe gestoppt wird, wobei der nicht-repräsentative Typ ein vom repräsentativen Typ der Leistungsfähigkeitsinformation für die Gruppe verschiedener Typ ist; oder
der Vorgang zum Sammeln davon in einem ersten Intervall ausgeführt wird, das länger ist als das Intervall für den repräsentativen Typ der Leistungsfähigkeitsinformation, und
wobei, falls eine Schwankungsrate oder ein Schwankungsmaß des repräsentativen Typs der Leistungsfähigkeitsinformation einen vorgegebenen Schwellenwert überschreitet,
der Vorgang zum Sammeln des nicht-repräsentativen Typs der Leistungsfähigkeitsinformation gestartet wird, oder
der Vorgang zum Sammeln davon in einem zweiten Intervall ausgeführt wird, das kürzer ist als das erste Intervall.

7. Betriebsüberwachungsverfahren nach Anspruch 6, wobei
beim Analysieren der gesammelten Leistungsfähigkeitsinformation eine Transformationsfunktion zwischen den mehreren Typen der Leistungsfähigkeitsinformation berechnet wird, und
beim Erzeugen einer Gruppe die Gruppe, die die Leistungsfähigkeitsinformation mit einer starken Korrelation enthält, basierend auf der Transformationsfunktion erzeugt wird.

8. Betriebsüberwachungsverfahren nach Anspruch 7, ferner mit dem Schätzen des nicht-repräsentativen Typs der Leistungsfähigkeitsinformation basierend auf dem repräsentativen Typ der Leistungsfähigkeitsinformation und der Transformationsfunktion.

9. Betriebsüberwachungsverfahren nach Anspruch 8, wobei der tatsächlich gesammelte nicht-repräsentative Typ der Leistungsfähigkeitsinformation angezeigt wird, wenn der nicht-repräsentative Typ der Leistungsfähigkeitsinformation gesammelt wird, und wobei der nicht-repräsentative Typ der Leistungsfähigkeitsinformation, der basierend auf dem repräsentativen Typ der Leistungsfähigkeitsinformation und der Transformationsfunktion geschätzt wird, angezeigt wird, wenn der nicht-repräsentative Typ der Leistungsfahigkeitsinformation nicht gesammelt wird.

10. Betriebsüberwachungsverfahren nach einem der Ansprüche 6 bis 9, ferner mit dem Setzen mindestens einer Information unter dem repräsentativen Typ, einem Sammelintervall für den repräsentativen Typ der Leistungsfähigkeitsinformation, ob der nicht-repräsentative Typ der Leistungsfähigkeitsinformation für gewöhnliche Zeiten gesammelt werden soll, dem ersten Intervall und dem zweiten Intervall gemäß einem Setzvorgang.

11. Computerlesbares Medium, auf dem ein Betriebsüberwachungsprogramm gespeichert ist, das einen Computer veranlasst, ein Verfahren auszuführen, das aufweist:
Sammeln mehrerer Typen von Leistungsfähigkeitsinformation einer Betriebsüberwachungszielmaschine;
Analysieren der gesammelten Leistungsfähigkeitsinformation;
Erzeugen einer Gruppe, die mehrere Typen der Leistungsfähigkeitsinformation der Betriebsüberwachungszielmaschine enthält, basierend auf einer vorgegebenen Bedingung; und
Ausführen eines Vorgangs zum Sammeln eines repräsentativen Typs der Leistungsfähigkeitsinformation für die Gruppe in einem vorgegebenen Intervall, während
der Vorgang zum Sammeln eines nicht-repräsentativen Typs der Leistungsfähigkeitsinformation für die Gruppe gestoppt wird, wobei der nicht-repräsentative Typ ein vom repräsentativen Typ der Leistungsfähigkeitsinformation für die Gruppe verschiedener Typ ist; oder
der Vorgang zum Sammeln davon in einem ersten Intervall ausgeführt wird, das länger ist als das Intervall für den repräsentativen Typ der Leistungsfähigkeitsinformation, und
wobei, falls eine Schwankungsrate oder ein Schwankungsmaß des repräsentativen Typs der Leistungsfähigkeitsinformation einen vorgegebenen Schwellenwert überschreitet,
der Vorgang zum Sammeln des nicht-repräsentativen Typs der Leistungsfähigkeitsinformation gestartet wird, oder
der Vorgang zum Sammeln davon in einem zweiten Intervall ausgeführt wird, das kürzer ist als das erste Intervall.

12. Computerlesbares Medium nach Anspruch 11, auf dem das Betriebsüberwachungsprogramm gespeichert ist, wobei
beim Analysieren der gesammelten Leistungsfähigkeitsinformation eine Transformationsfunktion zwischen den mehreren Typen der Leistungsfähigkeitsinformation berechnet wird; und
beim Erzeugen einer Gruppe die Gruppe, die die Leistungsfähigkeitsinformation mit einer starken Korrelation enthält, basierend auf der Transformationsfunktion erzeugt wird.

13. Computerlesbares Medium nach Anspruch 12, auf dem das Betriebsüberwachungsprogramm gespeichert ist, das ferner das Schätzen des nicht-repräsentativen Typs der Leistungsfähigkeitsinformation basierend auf dem repräsentativen Typ der Leistungsfähigkeitsinformation und der Transformationsfunktion aufweist.

14. Computerlesbares Medium nach Anspruch 13, auf dem das Betriebsüberwachungsprogramm gespeichert ist, wobei der nicht-repräsentative Typ der tatsächlich gesammelten Leistungsfähigkeitsinformation angezeigt wird, wenn der nicht-repräsentative Typ der Leistungsfähigkeitsinformation gesammelt wird, und der nicht-repräsentative Typ der Leistungsfähigkeitsinformation, der basierend auf dem repräsentativen Typ der Leistungsfähigkeitsinformation und der Transformationsfunktion geschätzt wird, angezeigt wird, wenn der nicht-repräsentative Typ der Leistungsfähigkeitsinformation nicht gesammelt wird.

15. Computerlesbares Medium nach einem der Ansprüche 11 bis 14, auf dem das Betriebsüberwachungsprogramm gespeichert ist, das ferner das Setzen mindestens einer Information unter dem repräsentativen Typ, einem Sammelintervall für den repräsentativen Typ der Leistungsfähigkeitsinformation, ob der nicht-repräsentative Typ der Leistungsfähigkeitsinformation für gewöhnliche Zeiten gesammelt werden soll, dem ersten Intervall und dem zweiten Intervall gemäß einem Setzvorgang aufweist.

## Revendications

1. Dispositif de surveillance d'opération comprenant :
un moyen de collecte d'informations de performance pour collecter une pluralité de types d'informations de performance d'une machine cible de surveillance d'opération ;
un moyen d'analyse de performance pour analyser lesdites informations de performance collectées par ledit moyen de collecte d'informations de performance ;
un moyen de groupement d'informations de performance pour générer un groupe qui comporte une pluralité de types desdites informations de performance de ladite machine cible de surveillance d'opération d'après une condition prédéterminée ; et
un moyen de modification de condition de surveillance pour amener ledit moyen de collecte d'informations de performance à réaliser une collecte d'un type représentatif desdites informations de performance pour ledit groupe généré par ledit moyen de groupement d'informations de performance à un intervalle prédéterminé, ledit moyen de modification de condition de surveillance étant adapté pour
- amener ledit moyen de collecte d'informations de performance à arrêter la collecte d'un type non représentatif desdites informations de performance pour ledit groupe, ledit type non représentatif étant un autre type que ledit type représentatif desdites informations de performance pour ledit groupe, ou
- amener ledit moyen de collecte d'informations de performance à réaliser la collecte de celui-ci à un premier intervalle qui est plus long que l'intervalle pour ledit type représentatif desdites informations de performance,
et dans lequel, dans le cas où un taux de fluctuation ou une quantité de fluctuation dudit type représentatif desdites informations de performance dépasse une valeur seuil prédéterminée, le moyen de modification de condition de surveillance étant en outre adapté pour
- amener ledit moyen de collecte d'informations de performance à démarrer la collecte dudit type non représentatif desdites informations de performance ou
- amener ledit moyen de collecte d'informations de performance à réaliser la collecte de celui-ci à un second intervalle qui est plus court que ledit premier intervalle.

2. Dispositif de surveillance d'opération selon la revendication 1, dans lequel ledit moyen d'analyse de performance calcule une fonction de transformée entre ladite pluralité de types desdites informations de performance ; et
ledit moyen de groupement d'informations de performance génère ledit groupe qui comporte lesdites informations de performance ayant une corrélation forte d'après ladite fonction de transformée.

3. Dispositif de surveillance d'opération selon la revendication 2, comprenant en outre un moyen d'estimation de performance pour estimer ledit type non représentatif desdites informations de performance d'après ledit type représentatif desdites informations de performance et ladite fonction de transformée.

4. Dispositif de surveillance d'opération selon la revendication 3, dans lequel ledit type non représentatif desdites informations de performance réellement collectées est montré lorsque ledit moyen de collecte d'informations de performance collecte ledit type non représentatif desdites informations de performance, et ledit type non représentatif desdites informations de performance estimé par ledit moyen d'estimation de performance est montré lorsque ledit moyen de collecte d'informations de performance ne collecte pas ledit type non représentatif desdites informations de performance.

5. Dispositif de surveillance d'opération selon l'une quelconque des revendications 1 à 4, comprenant en outre un moyen de dialogue pour établir au moins un parmi ledit type représentatif, un intervalle de collecte pour ledit type représentatif desdites informations de performance, le fait de collecter ou non ledit type non représentatif desdites informations de performance à des moments ordinaires, ledit premier intervalle, et ledit second intervalle, selon une opération de réglage.

6. Procédé de surveillance d'opération comprenant :
la collecte d'une pluralité de types d'informations de performance d'une machine cible de surveillance d'opération ;
l'analyse desdites informations de performance collectées ;
la génération d'un groupe qui comporte une pluralité de types desdites informations de performance de ladite machine cible de surveillance d'opération d'après une condition prédéterminée ; et
la réalisation d'une collecte d'un type représentatif desdites informations de performance pour ledit groupe à un intervalle prédéterminé, pendant
- l'arrêt de la collecte d'un type non représentatif desdites informations de performance pour ledit groupe, ledit type non représentatif étant un autre type que ledit type représentatif desdites informations de performance pour ledit groupe, ou
- la réalisation de la collecte de celui-ci à un premier intervalle qui est plus long que l'intervalle pour ledit type représentatif desdites informations de performance,
et dans lequel, dans le cas où un taux de fluctuation ou une quantité de fluctuation dudit type représentatif desdites informations de performance dépasse une valeur seuil prédéterminée,
- le démarrage de la collecte dudit type non représentatif desdites informations de performance ou
- la réalisation de la collecte de celui-ci à un second intervalle qui est plus court que ledit premier intervalle.

7. Procédé de surveillance d'opération selon la revendication 6, dans lequel ladite analyse desdites informations de performance collectées calcule une fonction de transformée entre ladite pluralité de types desdites informations de performance ; et
ladite génération d'un groupe génère ledit groupe qui comporte lesdites informations de performance ayant une corrélation forte d'après ladite fonction de transformée.

8. Procédé de surveillance d'opération selon la revendication 7, comprenant en outre l'estimation dudit type non représentatif desdites informations de performance d'après ledit type représentatif desdites informations de performance et ladite fonction de transformée.

9. Procédé de surveillance d'opération selon la revendication 8, dans lequel ledit type non représentatif desdites informations de performance réellement collectées est montré lorsque ledit type non représentatif desdites informations de performance est collecté, et ledit type non représentatif desdites informations de performance estimé d'après ledit type représentatif desdites informations de performance et ladite fonction de transformée est montré lorsque ledit type non représentatif desdites informations de performance n'est pas collecté.

10. Procédé de surveillance d'opération selon l'une quelconque des revendications 6 à 9, comprenant en outre le réglage d'au moins un parmi ledit type représentatif, un intervalle de collecte pour ledit type représentatif desdites informations de performance, le fait de collecter ou non ledit type non représentatif desdites informations de performance à des moments ordinaires, ledit premier intervalle, et ledit second intervalle, selon une opération de réglage.

11. Support lisible par ordinateur enregistrant sur celui-ci un programme de surveillance d'opération, amenant l'ordinateur à réaliser un procédé comprenant :
la collecte d'une pluralité de types d'informations de performance d'une machine cible de surveillance d'opération ;
l'analyse desdites informations de performance collectées ;
la génération d'un groupe qui comporte une pluralité de types desdites informations de performance de ladite machine cible de surveillance d'opération d'après une condition prédéterminée ; et
la réalisation d'une collecte d'un type représentatif desdites informations de performance pour ledit groupe à un intervalle prédéterminé, pendant
- l'arrêt de la collecte d'un type non représentatif desdites informations de performance pour ledit groupe, ledit type non représentatif étant un autre type que ledit type représentatif desdites informations de performance pour ledit groupe, ou
- la réalisation de la collecte de celui-ci à un premier intervalle qui est plus long que l'intervalle pour ledit type représentatif desdites informations de performance,
et dans lequel, dans le cas où un taux de fluctuation ou une quantité de fluctuation dudit type représentatif desdites informations de performance dépasse une valeur seuil prédéterminée,
- le démarrage de la collecte dudit type non représentatif desdites informations de performance ou
- la réalisation de la collecte de celui-ci à un second intervalle qui est plus court que ledit premier intervalle.

12. Support lisible par ordinateur selon la revendication 11, enregistrant sur celui-ci ledit programme de surveillance d'opération, dans lequel
ladite analyse desdites informations de performance collectées calcule une fonction de transformée entre ladite pluralité de types desdites informations de performance ; et
ladite génération d'un groupe génère ledit groupe qui comporte lesdites informations de performance ayant une corrélation forte d'après ladite fonction de transformée.

13. Support lisible par ordinateur selon la revendication 12, enregistrant sur celui-ci ledit programme de surveillance d'opération, comprenant en outre l'estimation dudit type non représentatif desdites informations de performance d'après ledit type représentatif desdites informations de performance et ladite fonction de transformée.

14. Support lisible par ordinateur selon la revendication 13, enregistrant sur celui-ci ledit programme de surveillance d'opération, dans lequel ledit type non représentatif desdites informations de performance réellement collectées est montré lorsque ledit type non représentatif desdites informations de performance est collecté, et ledit type non représentatif desdites informations de performance estimé d'après ledit type représentatif desdites informations de performance et ladite fonction de transformée est montré lorsque ledit type non représentatif desdites informations de performance n'est pas collecté.

15. Support lisible par ordinateur selon l'une quelconque des revendications 11 à 14, enregistrant sur celui-ci ledit programme de surveillance d'opération, comprenant en outre le réglage d'au moins un parmi ledit type représentatif, un intervalle de collecte pour ledit type représentatif desdites informations de performance, le fait de collecter ou non ledit type non représentatif desdites informations de performance à des moments ordinaires, ledit premier intervalle, et ledit second intervalle, selon une opération de réglage.
